# EUROPÄISCHE PATENTSCHRIFT

(11) **EP 3 526 285 B1**
(45) Veröffentlichungstag und Bekanntmachung des Hinweises auf die Patenterteilung: **17.07.2024**
(21) Anmeldenummer: 17790719.3
(22) Anmeldetag: 12.10.2017
(51) Int. Cl.: C08K 5/544

(54) **STABILISATOREN FÜR KLEBSTOFF-, DICHTSTOFF- UND BESCHICHTUNGSZUSAMMENSETZUNGEN**
STABILIZERS FOR ADHESIVES, SEALANTS AND COATING COMPOSITIONS
STABILISANTS POUR COMPOSITIONS D'ADHÉSIFS, DE PRODUITS D'ÉTANCHÉITÉ, ET DE REVÊTEMENTS

(30) Priorität: 17.10.2016 EP 16194082
(43) Veröffentlichungstag der Anmeldung: 21.08.2019
(73) Patentinhaber: Covestro Deutschland AG, 51373 Leverkusen (DE)
(72) Erfinder: THIEBES, Christoph, 51061 Köln (DE); NATTKE, Ute, 51375 Leverkusen (DE)
(74) Vertreter: Levpat
(86) Internationale Anmeldenummer: PCT/EP2017/076120
(87) Internationale Veröffentlichungsnummer: WO 2018/073102

(56) Entgegenhaltungen:
- EP-A1- 2 644 657
- DATABASE WPI Week 201518, Derwent World Patents Index; AN 2015-03698S, XP002768692

## Beschreibung

Die vorliegende Erfindung betrifft die Verwendung spezieller Aminosilane als Stabilisatoren für Klebstoff-, Dichtstoff- und Beschichtungszusammensetzungen, insbesondere von feuchtigkeitshärtenden Klebstoff-, Dichtstoff- und Beschichtungszusammensetzungen auf Basis von Polyethern, insbesondere auf Basis silanmodifizierter Polyether.

Feuchtigkeitshärtende Klebstoffzusammensetzungen finden beispielsweise Anwendung zum Verkleben von Bodenbelägen, insbesondere von Holzbelagelementen wie Parkett. Die dabei verwendeten feuchtigkeitsreaktiven Klebstoffe lassen sich beispielsweise auf Basis von Polyurethanverbindungen mit freien Isocyanatgruppen, oder auf Basis silanmodifizierter Polymere herstellen. Diese Klebstoffe zeichnen sich jeweils durch feuchtigkeitsreaktive Gruppen (Isocyanat- bzw. Silangruppen) aus, welche in Gegenwart von Wasser miteinander reagieren und zu einer Vernetzung der Polymere führen. Bei den silanmodifizierten Polymeren vernetzen beispielsweise die feuchtigkeitsreaktiven Silangruppen durch Hydrolyse und anschließende Kondensation zu einem dreidimensionalen Netzwerk.

Durch die Vernetzung geht die Klebstoffzusammensetzung von einem niedrig-viskosen, weichen und ggf. plastisch verformbaren Zustand in einen härteren Zustand über. Dieser Prozess wird auch als Härtung bezeichnet.

Silanmodifizierte Polymere (SMP) werden seit einiger Zeit erfolgreich als Bindemittel in feuchtigkeitshärtenden Zusammensetzungen eingesetzt, die insbesondere als elastische Klebstoffe, Dichtstoffe oder Beschichtungen in der Bau- und Fertigungsindustrie Verwendung finden und eine Alternative zu den traditionellen Polyurethanen darstellen. Zu den Vorteilen der Systeme auf Basis von SMP gegenüber letzteren gehört, dass eine unerwünschte Blasenbildung durch Kohlendioxid in dicken Schichten unterbleibt und in vielen Fällen auf die Aufbringung einer haftungsvermittelnden Schicht verzichtet werden kann.

Silanmodifizierte Polymere können sehr einfach aus Polyurethan-Polymeren erhalten werden, indem deren Isocyanatgruppen mittels Amino-, Thio- oder Hydroxysilanen zu Silangruppen umfunktionalisiert werden. Silanmodifizierte Polymere, welche frei sind von Harnstoffgruppen und nur wenige oder gar keine Urethangruppen enthalten, sind ebenfalls bekannt und sind beispielsweise durch Umsetzung von Polyetherpolyolen mit Isocyanatosilanen oder durch Hydrosilylierung von allylfunktionellen Polyethern zugänglich. Silanmodifizierte Polymere, die jeweils an den Enden des Polymerrückgrats mit Silangruppen modifiziert sind, werden auch als silanterminierte Polymere (STP) bezeichnet.

Die WO 2012/022494 A1 offenbart beispielhaft einen Parkettklebstoff auf Basis silanmodifizierter Polyakylenoxid-Polymere. Dieser Klebstoff enthält - neben dem silanmodifizierten Polyalkylenoxid - Kreidepulver und Wollastonit als Füllstoffe, ein silanmodifiziertes Trockenmittel und einen silanmodifizierten Haftvermittler. Als Haftvermittler werden in den Beispielen von WO 2012/022494 A1 Aminosilane verwendet. Ebenfalls in der EP 2 644 657 A1 und der CN 104 130 378 A werden Aminosilane als Haftvermittler offenbart.

Es hat sich allerdings gezeigt, dass die im Markt befindlichen Parkettklebstoffe auf Basis silanmodifizierter Polymere nicht in allen Fällen den Anforderungen an Langlebigkeit der Klebverbindung genügen, wenn sie so eingesetzt werden, dass die Klebverbindung einer erhöhten thermischen Belastung ausgesetzt wird (*Boden Wand Decke,* Ausgabe 1/2016, Seite 48). Auf Grund der thermischen Belastung können solche Klebstoffe vom festen in einen weichen, pastösen, bröseligen oder gar pulvrigen Zustand übergehen. Diese Gefahr droht insbesondere dann, wenn die Klebstoffe zum Verkleben von Bodenbelägen auf einer Fußbodenheizung verwendet werden.

Es ist bekannt, dass dem Einfluss hoher thermischer Belastung durch Zugabe von Stabilisatoren entgegengewirkt werden kann, welche die thermisch induzierte Oxidation von Polyethern vermindern.

WO 2012/022494 A1 schlägt beispielsweise vor, zur Verbesserung der Haltbarkeit von Parkettklebstoffen Antioxidationsmittel, insbesondere sterisch gehinderte Phenole, und/oder UV-Lichtabsorber, insbesondere sterisch gehinderte Amine, einzusetzen.

Die DE 10 2011 003 425 A1 beschreibt beispielsweise, dass der Einsatz einer spezifischen Kombination bestimmter phenolischer Verbindungen in einer Zusammensetzung auf Basis silylterminierter Polymere eine sehr gute Dauertemperaturbeständigkeit der Zusammensetzung nach Aushärtung gewährleistet. Zu den Nachteilen der phenolischen Antioxidatien gehören der hohe Preis sowie die Möglichkeit einer Migration aus dem stabilisierten Compound.

Bei der Verwendung phenolischer Antioxidantien als Stabilisatoren kann ebenfalls die Aushärtung einer auf der Oberfläche der ausgehärteten Zusammensetzung aufgetragenen reaktiven Beschichtung verzögert werden. Besonders problematisch ist dies im Fall der Beschichtung von Dichtstoffen auf Basis entsprechend stabilisierter silanmodifizierter Polymere mit oxidativ aushärtenden Lacken.

Vor diesem Hintergrund ist es Aufgabe der vorliegenden Erfindung, weitere Stabilisatoren für Klebstoff-, Dichtstoff- und Beschichtungszusammensetzungen bereitzustellen, mit denen die Temperaturbeständigkeit der Zusammensetzung im ausgehärteten Zustand verbessert werden kann. Insbesondere ist es Aufgabe der Erfindung, Stabilisatoren für feuchtigkeitshärtende Klebstoff-, Dichtstoff- und Beschichtungszusammensetzungen auf Basis von Polyethern, insbesondere silanmodifizierter Polyether bereitzustellen.

Diese Aufgabe wird gelöst durch die Verwendung eines Aminosilans als Stabilisator für eine Klebstoff-, Dichtstoff- oder Beschichtungszusammensetzung, wobei das Aminosilan wenigstens eine sekundäre Aminogruppe aufweist, und wobei der Stabilisator die thermische Beständigkeit der Zusammensetzung im ausgehärteten Zustand erhöht.

Aminosilane, insbesondere auch solche, die eine sekundäre Aminogruppe aufweisen, werden bekanntermaßen als Haftvermittler in Klebstoffzusammensetzungen, insbesondere von Klebstoffzusammensetzungen auf Grundlage silanmodifizierter Polymere, eingesetzt. Es hat sich nun aber überraschenderweise gezeigt, dass die besonderen, erfindungsgemäß zu verwendenden Aminosilane neben ihrer haftvermittelnden Wirkung auch die Beständigkeit von Klebstoffen, Dichtstoffen und Beschichtungen gegenüber thermischer Belastung erhöhen und somit als Stabilisatoren eingesetzt werden können. Dies trifft insbesondere auf Klebstoff-, Dichtstoff- oder Beschichtungszusammensetzungen zu, die wenigstens einen Polyether oder ein Polyetherderivat aufweisen. Als Polyetherderivat wird dabei ein Polymer bezeichnet, welches eine Polyetherstruktureinheit umfasst. Dieser Effekt wird mit strukturell ähnlichen Aminosilanen, welche nicht über eine sekundäre Aminogruppe verfügen, nicht beobachtet.

Unter den Begriff Stabilisator fallen nach allgemeinem Verständnis eines Fachmanns Zusatzstoffe, die unbeständigen oder durch äußere Einflüsse veränderbaren Stoffen zugesetzt werden, um möglichen Veränderungen entgegenzuwirken. Das können beispielsweise oxidative Schädigungen, Molekülspaltungen durch UV-Licht sowie Zustandsänderungen (z.B. Koagulation, Absetzen) sein. Insbesondere sind von dem Begriff Stabilisator auch Antioxidantien umfasst, die unerwünschte, durch Sauerstoffeinwirkung verursachte oxidative Prozesse in Stoffen hemmen oder verhindern (Gerd Habenicht, "Kleben", 5. Auflage, 2009, Springer-Verlag Berlin Heidelberg).

Als Stabilisator wird im Rahmen dieser Erfindung insbesondere ein Bestandteil von Klebstoff-, Dichtstoff- und Beschichtungsmittelzusammensetzungen bezeichnet, welcher die Beständigkeit der Zusammensetzung gegenüber thermischer Belastung (Temperaturbeständigkeit) erhöht. Insbesondere wird dadurch die Temperaturbeständigkeit der Zusammensetzung im ausgehärteten Zustand verbessert. Darunter fällt insbesondere auch die Beständigkeit der ausgehärteten Zusammensetzung bei Raumtemperatur. Es wird vermutet, dass der Stabilisator den oxidativen Abbau der vernetzten Polymere in der ausgehärteten Zusammensetzung verhindert. Durch den Einsatz eines Stabilisators bleiben die mechanischen Eigenschaften der ausgehärteten Zusammensetzung über einen Zeitraum von mehr als sieben Tagen erhalten, selbst wenn die Zusammensetzung einer Temperatur von bis zu 90°C im Kontakt mit Luftsauerstoff ausgesetzt wird.

Die Temperaturbeständigkeit von Klebstoff-, Dichtstoff- und Beschichtungsmittelzusammensetzungen kann beispielsweise durch Messung der Oxidationsinduktionszeit mittels dynamischer Differenzkalorimetrie gemäß DIN EN ISO 11357-6:2013 bestimmt werden. Dabei weist eine hohe Oxidationsinduktionszeit auf eine hohe Temperaturbeständigkeit hin. In einer Ausführungsfonn wird durch die erfindungsgemäß zu verwendende Aminosilanverbindung folglich die Oxidationsinduktionszeit gemessen nach DIN EN ISO 1 1357-6:2013 der Zusammensetzung erhöht.

Die Temperaturbeständigkeit kann ferner dadurch bestimmt werden, dass die ausgehärtete Klebstoff-, Dichtstoff- bzw. Beschichtungsmittelzusammensetzung, beispielsweise in Form einer 2 mm starken Membran, über einen Zeitraum von mehreren Tagen, beispielsweise acht Tagen, einer gegenüber der Raumtemperatur erhöhten Temperatur, beispielsweise 90°C, beispielsweise in einem Umluftofen ausgesetzt wird und anschließend die mechanischen Eigenschaften der Zusammensetzung gemessen werden. Die mechanischen Eigenschaften können dabei beispielsweise anhand der Shore-A-Härte gemessen nach DIN ISO 7619-1 quantifiziert werden.

Der Begriff Aminosilan bezeichnet im Rahmen dieser Erfindung Organosilane, die mindestens einen organischen Rest mit mindestens einer Aminogruppe aufweisen. Vorzugsweise ist der die Aminogruppe aufweisende organische Rest über eine Si-C-Bindung mit einem Siliciumatom verbunden.

Im Falle der erfindungsgemäß zu verwendenden Aminosilane handelt es sich demnach um Organosilane, die mindestens einen organischen Rest mit mindestens einer sekundären Aminogruppe aufweisen.

Als sekundäre Aminogruppe wird nach allgemeinem Verständnis eine Aminogruppe der Formel HNR₂ bezeichnet, wobei die beiden Reste R jeweils für organische Reste stehen, die über eine C-N-Bindung mit der Aminogruppe verknüpft sind. Bei den Resten R kann es sich um ggf. substituierte Alkyl-, Cycloalkyl- oder Arylgruppen handeln. Carbamoyl- oder Urethangruppen sind in diesem Sinne keine sekundären Aminogruppen.

Als Organosilane gelten im Rahmen dieser Erfindung siliciumorganische Verbindungen umfassend mindestens ein Siliciumatom und mindestens einen organischen Rest, der über eine Si-C-Bindung an ein Siliciumatom gebunden ist. Vorzugsweise umfassen Organosilane im Sinne dieser Erfindung auch mindestens einen organischen Rest, der über eine Si-O-Bindung an ein Siliciumatom gebunden ist. Dabei handelt es sich insbesondere um eine Alkoxy- oder eine Acyloxygruppe. Derartige Verbindungen sind dem Fachmann auch als Organoalkoxysilane bzw. Organoacyloxysilane bekannt.

Die erfindungsgemäß zu verwendenden Aminosilane können beispielsweise monomere Verbindungen mit genau einem Siliciumatom oder polymere Organosiloxane sein, die mehrere Siliciumatome aufweisen und bei denen benachbarte Siliciumatome über genau ein Sauerstoffatom verknüpft sind.

Monomere Aminosilane können eine oder mehrere, vorzugsweise genau eine, sekundäre Aminogruppe aufweisen.

Polymere Organosiloxane können dabei eine lineare, zyklische oder verzweigte Struktur und eine oder mehrere sekundäre Aminogruppen aufweisen sowie gegebenenfalls zusätzlich primäre Aminogruppen enthalten.

Geeignete polymere Organosiloxane haben vorzugsweise ein Molekulargewicht von bis zu 10000 g/mol, bevorzugt bis zu 8000 g/mol, besonders bevorzugt bis zu 6000 g/mol, am meisten bevorzugt bis zu 4000 g/mol.

In einer Ausführungsform weist das erfindungsgemäß zu verwendende Aminosilan eine Struktureinheit der allgemeinen Formel (I) auf

R²₃Si-CₘH₂ₘ-NH-R¹ (I),

wobei R¹ ausgewählt ist aus -CₙH₂ₙ₊₁, -CₙH₂ₙNH₂, -CₙH₂ₙ-SiR³₃, -(C₃₋₁₀)-Cycloalkyl,jeder der Reste R² und R³ unabhängig voneinander ausgewählt ist aus Alkyl-, Alkoxy-, Acyloxy- und Organosiloxangruppen, und
m und n jeweils ganze Zahlen von 1 bis 4 darstellen.

Vorzugsweise stellt dabei mindestens einer der Reste R² und/oder mindestens einer der Reste R³ eine Alkoxygruppe dar.

In einer Ausführungsform ist das erfindungsgemäß zu verwendende Aminosilan eine Verbindung der allgemeinen Formel (II),

R²₃Si-CₘH₂ₘ-NH-R¹ (II),

wobei R¹ ausgewählt ist aus -CₙH₂ₙ₊₁, -CₙH₂ₙNH₂, -CₙH₂ₙ-SiR³₃, -(C₃₋₁₀)-Cycloalkyl,
jeder der Reste R² und R³ unabhängig voneinander ausgewählt ist aus -(C₁-C₁₂)-Alkyl, -O-(C₁-C₁₂)-Alkyl, -O-CO-(C₁-C₁₂)-Alkyl, mindestens einer der Reste R² und/oder mindestens einer der Reste R³ eine -O-(C₁-C₁₂)-Alkylgruppe darstellen, und m und n jeweils ganze Zahlen von 1 bis 4 darstellen.

In einer bevorzugten Ausführungsform ist das erfindungsgemäß zu verwendende Aminosilan ein monomeres Aminosilan der allgemeinen Formel (III),

R²₃Si-CₘH₂ₘ-NH-R¹ (III),

wobei R¹ ausgewählt ist aus -CₙH₂ₙ₊₁, -CₙH₂ₙNH₂, -(C₃₋₁₀)-Cycloalkyl,
jeder der Reste R² unabhängig voneinander ausgewählt ist aus -(C₁-C₁₂)-Alkyl, -O-(C₁-C₁₂)-Alkyl, -O-CO-(C₁-C₁₂)-Alkyl,
mindestens einer der Reste R² eine -O-(C₁-C₁₂)-Alkylgruppe darstellt, und
m und n jeweils ganze Zahlen von 1 bis 4 darstellen.

In einer besonders bevorzugten Ausführungsform ist das erfindungsgemäß zu verwendende Aminosilan ein monomeres Aminosilan der allgemeinen Formel (IV),

R²₃Si-CₘH₂ₘ-NH-CₙH₂ₙNH₂ (IV),

wobei jeder der Reste R² unabhängig voneinander ausgewählt ist aus -(C₁-C₁₂)-Alkyl, -O-(C₁-C₁₂)-Alkyl, -O-CO-(C₁-C₁₂)-Alkyl,
mindestens einer der Reste R² eine -O-(C₁-C₁₂)-Alkylgruppe darstellt, und
m und n jeweils ganze Zahlen von 1 bis 4 darstellen.

In einer weiteren bevorzugten Ausführungsform ist das erfindungsgemäß zu verwendende Aminosilan ein monomeres Aminosilan der allgemeinen Formel (V),

R²₃Si-C₃H₆-NH-R¹ (V),

wobei R¹ ausgewählt ist aus -C₄H₉ und -C₂H₄NH₂,
jeder der Reste R² unabhängig voneinander ausgewählt ist aus -(C₁-C₁₂)-Alkyl, -O-(C₁-C₁₂)-Alkyl, -O-CO-(C₁-C₁₂)-Alkyl, und
mindestens einer der Reste R² eine -O-(C₁-C₁₂)-Alkylgruppe darstellt.

Als (C₁-C₁₂)-Alkyl wird im Rahmen dieser Erfindung eine Alkylgruppe mit 1 bis 12 Kohlenstoffatomen bezeichnet. Geeignete (C₁-C₁₂)-Alkyl sind insbesondere Methyl, Ethyl, n-Propyl, iso-Propyl, n-Butyl, iso-Butyl, sec-Butyl, tert-Butyl, Pentyl, Hexyl, Heptyl, Octyl, Nonyl, Decyl, Undecyl, Dodecyl und deren jeweilige Isomere.

Als (C₃-C₁₀)-Cycloalkyl wird im Rahmen dieser Erfindung eine Cycloalkylgruppe mit 3 bis 10 Kohlenstoffatomen bezeichnet. Bevorzugte Cycloalkylgruppen sind solche mit 3 bis 6 Kohlenstoffatomen [(C₃-C₆)-Cycloalkyl]. Geeignete Cycloalkylgruppen sind insbesondere Cyclopropyl, Cyclobutyl, Cyclopentyl, Cyclohexyl. Besonders geeignet ist Cyclohexyl.

Vorzugsweise stellen mindestens einer der Reste R² und mindestens einer der Reste R³ eine -O-(C₁-C₁₂)-Alkylgruppe dar. Dabei handelt es sich besonders bevorzugt um eine Methoxygruppe. Es kann aber auch von Vorteil sein, dass es sich um eine Ethoxygruppe handelt, insbesondere in Fällen von feuchtigkeitshärtenden Klebstoff-, Dichtstoff- bzw. Beschichtungsmittelzusammensetzungen, bei denen bei der Aushärtung kein Methanol freigesetzt werden soll.

Vorzugsweise ist jeder der Reste R² bzw. R³ unabhängig voneinander ausgewählt aus -(C₁-C₆)-Alkyl, -O-(Ci-Cs)-Alkyl. Besonders bevorzugt ist jeder der Reste R² bzw. R³ unabhängig voneinander ausgewählt aus -(C₁-C₄)-Alkyl, -O-(C₁-C₄)-Alkyl. Am meisten bevorzugt ist jeder der Reste R² bzw. R³ unabhängig voneinander ausgewählt aus Methyl, Ethyl, n-Propyl, iso-Propyl, Methoxy, Ethoxy und Propoxy. In einer weiteren bevorzugten Ausführungsform ist jeder der Reste R² bzw. R³ unabhängig voneinander ausgewählt aus Methyl, Ethyl, n-Propyl, iso-Propyl, Ethoxy.

Vorzugsweise steht mindestens einer der Reste R² bzw. R³ für -O-(C₁-C₁₂)-Alkyl und mindestens ein weiterer der Reste R² bzw. R³ für -(C₁-C₁₂)-Alkyl. Beispielsweise stehen zwei der Reste R² bzw. R³ für -O-(C₁-C₁₂)-Alkyl und der dritte Rest R² bzw. R³ für -(C₁-C₁₂)-Alkyl.

In einer weiteren Ausführungsform stehen alle Reste R² bzw. R³ für -O-(C₁-C₁₂)-Alkyl.

Soweit die Reste R² und R³ für Alkoxygruppen stehen, handelt es sich vorzugsweise um Methoxyoder Ethoxygruppen. In einer bevorzugten Ausführungsform handelt es sich ausschließlich um Ethoxygruppen. Dies hat den Vorteil, dass in Gegenwart von Wasser kein Methanol abgespalten und freigesetzt wird.

Die Länge der in den Formeln (I) bis (IV) gezeigten CₘH₂ₘ-Gruppe kann variieren. Bevorzugt ist m = 1 und m = 3. Ganz besonders bevorzugt handelt es sich bei der CₘH₂ₘ-Gruppe um eine -CH₂-CH₂-CH₂- oder um eine -CH₂-Gruppe.

Der in den Formeln (I) bis (III) gezeigte Rest R¹ ist vorzugsweise ausgewählt aus -C₄H₉, -C₂H₄NH₂ und -C₂H₄SiR³₃, wobei R³ die oben genannte Bedeutung hat. Besonders bevorzugt steht R¹ für - C₂H₄NH₂.

Besonders geeignete Aminosilane sind beispielsweise Bis(trimethoxysilylpropyl)amin, N-(n-Butyl)-3-aminopropyltrimethoxysilan, N-(2-Aminoethyl)-3-aminopropyltrimethoxysilan, N-(2-Aminoethyl)-3-aminopropyltriethoxysilan, N-(2-Aminoethyl)-3-aminopropylmethyldimethoxysilan und Mischungen davon.

Die erfindungsgemäß zu verwendenden Aminosilane sind kommerziell beispielsweise unter den Handelsnamen Dynasylan^{®} 1124 (Bis(trimethoxysilylpropyl)amin), Dynasylan^{®} 1189 (N-(n-Butyl)-3-aminopropyltrimethoxysilan), Dynasylan^{®} DAMO (N-(2-Aminoethyl)-3-aminopropyltrimethoxysilan) oder Dynasylan^{®} 1411 (N-(2-Aminoethyl)-3-aminopropylmethyldimethoxysilan).

Die erfindungsgemäß zu verwendenden Aminosilane werden der Klebstoff-, Dichtstoff- oder Beschichtungsmittelzusammensetzung vorzugsweise in einer Menge von 0,5 bis 10 Gew.-%, bevorzugt 1 bis 7,5 Gew.-%, besonders bevorzugt 1,5 bis 5 Gew.-%, bezogen auf das Gesamtgewicht der Zusammensetzung zugesetzt.

Die Klebstoff-, Dichtstoff oder Beschichtungsmittelzusammensetzung umfasst vorzugsweise ein Polymer auf Basis eines Polyethers. Dabei kann es sich um einen reinen Polyether handeln, oder um ein Polymer, welches mindestens eine Polyetherstruktureinheit enthält. Das Polymer auf Basis eines Polyethers kann beispielsweise als Bindemittel, insbesondere als feuchtigkeitsreaktives Bindemittel, oder als Weichmacher in der Zusammensetzung enthalten sein.

Bei der Klebstoff-, Dichtstoff- oder Beschichtungsmittelzusammensetzung kann es sich um ein einoder mehrkomponentiges System handeln.

Ein mehrkomponentiges System umfasst beispielsweise eine erste Komponente, welche eine Isocyanatgruppen-haltige Verbindung umfasst, und eine zweite Komponente, welche eine Isocyanat-reaktive Verbindung umfasst. Durch Mischen der beiden Komponenten wird die Aushärtung der Zusammensetzung in Gang gesetzt. Im Falle einer mehrkomponentigen Zusammensetzung ist darauf zu achten, dass die Komponente, die das erfindungsgemäß zu verwendende Aminosilan enthält, keine Verbindungen enthält, die mit Aminogruppen reagieren.

Ein einkomponentiges System umfasst beispielsweise ein Polymer, das feuchtigkeitsreaktive Organosilangruppen aufweist und in Gegenwart von Feuchtigkeit aushärtet.

Bei der Klebstoff-, Dichtstoff- oder Beschichtungsmittelzusammensetzung handelt es sich vorzugsweise um eine feuchtigkeitshärtende Zusammensetzung. Als feuchtigkeitshärtende Zusammensetzung wird im Rahmen dieser Erfindung eine Zusammensetzung bezeichnet, die in Gegenwart von Wasser von einem weichen in einen härteren Zustand übergeht.

Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die beispielsweise über einen Statikmischer eingemischt wird. Bei der Aushärtung mittels Luftfeuchtigkeit oder Feuchtigkeit aus einem Substrat härtet die Zusammensetzung von außen nach innen durch. Die Geschwindigkeit der Aushärtung wird dabei von verschiedenen Faktoren, wie beispielsweise der Diffusionsratc des Wassers, der Temperatur, der Umgebungsfeuchtigkeit und der Klebegeometrie, bestimmt und verlangsamt sich in der Regel mit dem Fortschreiten der Aushärtung.

Vorzugsweise umfasst eine feuchtigkeitshärtende Zusammensetzung wenigstens ein Polymer mit feuchtigkeitsreaktiven Gruppen, die in Gegenwart von Wasser miteinander reagieren und zu einer Vernetzung einzelner Polymerketten führen. Feuchtigkeitsreaktive Zusammensetzungen umfassen beispielsweise ein Polymer, dass Isocyanatgruppen oder feuchtigkeitsreaktive Organosilangruppen aufweist. Als feuchtigkeitsreaktive Organosilangruppe wird dabei eine Organosilangruppe bezeichnet, die mindestens einen über eine Si-O-Bindung gebundenen organischen Rest aufweist, insbesondere eine über eine Si-O-Bindung gebundene Alkoxy- oder Acyloxygruppe. Besonders bevorzugt umfasst das Polymer mit feuchtigkeitsreaktiven Gruppen mindestens eine Polyetherstruktureinheit.

Die Klebstoff-, Dichtstoff- oder Beschichtungsmittelzusammensetzung umfasst vorzugsweise 10 bis 40 Gew.-%, bevorzugt 10 bis 25 Gew.-%, besonders bevorzugt 12 bis 17 Gew.-%, Polymer mit feuchtigkeitsreaktiven Gruppen bezogen auf das Gesamtgewicht der Zusammensetzung.

Vorzugsweise ist das Polymer mit feuchtigkeitsreaktiven Gruppen ein silanmodifiziertes Polymer. Ein silanmodifiziertes Polymer im Sinne dieser Erfindung umfasst mindestens eine feuchtigkeitsreaktive Organosilangruppe. Vorzugsweise handelt es sich um eine endständige Organosilangruppe, die mit einem Ende des Polymerrückgrats verbunden ist. In einer bevorzugten Ausführungsform handelt es sich um ein silanmodifiziertes Polymer auf Basis eines Polyethers, d. h. ein silanmodifiziertes Polymer, welches mindestens eine Polyetherstruktureinheit enthält.

Vorzugsweise weist das silanmodifizierte Polymer ein gewichtsgemitteltes Molekulargewicht von 500 bis 24000 g/mol auf. Im Falle einer Klebstoffzusammensetzung weist das silanmodifizierte Polymer vorzugsweise ein gewichtsgemitteltes Molekulargewicht von 4000 bis 18000 g/mol auf. Im Falle einer Dichtstoffzusammensetzung weist das silanmodifizierte Polymer vorzugsweise ein gewichtsgemitteltes Molekulargewicht von 8000 bis 24000 g/mol auf. Im Falle einer Beschichtungszusammensetzung weist das silanmodifizierte Polymer vorzugsweise ein gewichtsgemitteltes Molekulargewicht von 500 bis 12000 g/mol auf.

Soweit nicht anders angegeben wird das gewichtsgemittelte Molekulargewicht von silanmodifizierten Polymeren durch Gelpermeationschromatographie gemäß DIN 55672-1:2016-03 bestimmt.

In einer Ausführungsform ist das silanmodifizierte Polymer auf Basis eines Polyethers erhältlich durch
- Umsetzung von Allylgruppen-haltigen Polyethern mit Hydrosilanen;
- Copolymerisation von Alkylenoxiden mit Epoxysilanen;
- Umsetzung von Polyetherpolyolen mit Epoxysilanen:
- Umsetzung von Polyetherpolyolen mit Isocyanatosilanen; oder
- Umsetzung von Isocyanatgruppen-haltigen Urethan-Polyethern mit Amino-, Hydroxy- und/oder Mercaptosilanen.

Als Polyetherpolyole werden dabei vorzugsweise Polyetherdiole oder Polyethertriole eingesetzt. Geeignete Polyetherpolyole müssen keine reinen Polyether sein, sondern können beispielsweise auch solche hydroxygruppenhaltigen Polyether sein, die durch Kettenverlängerung durch Reaktion von Polyetherpolyolen mit Diisocyanaten zugänglich sind.

Die genannten Isocyanatgruppen-haltigen Urethan-Polyether können dabei beispielsweise durch Umsetzung von Polyetherpolyolen, vorzugsweise Polyetherdiolen, mit Diisocyanaten erhalten werden. Vorzugsweise werden die Diisocyanate so eingesetzt, dass die Isocyanatgruppen des Diisocyanates dabei im Verhältnis zu den freien Hydroxygruppen des Polyetherpolyols im Überschuss vorliegen. Vorzugsweise wird das Verhältnis der freien Hydroxygruppen des Polyetherpolyols zu den Isocyanatgruppen zwischen 1 und 5, vorzugsweise zwischen 1,5 und 2 gewählt.

In einer bevorzugten Ausführungsform weist das silanmodifizierte Polymer wenigstens eine feuchtigkeitsreaktive Organosilangruppe der allgemeinen Formel (VI) auf:

-SiR⁴₃ (VI),

wobei die Reste R⁴ unabhängig voneinander ausgewählt sind aus -(C₁-C₁₂)-Alkyl und -O-(C₁-C₁₂)-Alkyl; und
mindestens einer der Reste R⁴ ausgewählt ist aus -O-(C₁-C₁₂)-Alkyl.

Vorzugsweise stehen wenigstens zwei der Reste R⁴ für -O-(C₁-C₁₂)-Alkyl und der übrige Rest R⁴ ist ausgewählt aus -(C₁-C₁₂)-Alkyl und -O-(C₁-C₁₂)-Alkyl.

In einer weiteren Ausführungsform stehen alle Reste R⁴ für -O-(C₁-C₁₂)-Alkyl.

Besonders bevorzugte -O-(C₁-C₁₂)-Alkylgruppen sind dabei Methoxy- und Ethoxygruppen. Besonders bevorzugte -(C₁-C₁₂)-Alkylgruppen sind Methyl und Ethyl.

In einer Ausführungsform sind die Reste R⁴ unabhängig voneinander ausgewählt aus Methyl, Ethyl, Methoxy, Ethoxy; und
mindestens einer der Reste R⁴ ist ausgewählt aus Methoxy und Ethoxy.

In einer weiteren Ausführungsform sind die Reste R⁴ unabhängig voneinander ausgewählt aus Methyl, Ethyl, Ethoxy; wobei
mindestens einer der Reste R⁴ für Ethoxy steht.

Soweit die Reste R⁴ für Alkoxygruppen stehen, handelt es sich vorzugsweise um Methoxy- oder Ethoxygruppen. In einer bevorzugten Ausführungsform handelt es sich ausschließlich um Ethoxygruppen, insbesondere falls die oben genannten Reste R² und R³ der erfindungsgemäß einzusetzenden Aminosilane für Ethoxygruppen stehen. Dies hat den Vorteil, dass die feuchtigkeitsreaktiven Silangruppen kein Methanol, sondern nur Ethanol abspalten.

Weiterhin geeignet sind kommerziell erhältliche silanmodifizierte Polymere, insbesondere Produkte unter den Handelsnamen MS Polymer^{™} (von Kaneka Corp.; insbesondere die Typen S203H, S303H, S227, S810, MA903 oder S943); MS Polymer^{™} bzw. Silyl^{™} (von Kaneka Corp.; insbesondere die Typen SAT010, SAT030, SAT200, SAX350, SAX400, SAX725, MAX450, MAX602 oder MAX951 ); Excestar^{®} (von Asahi Glass Co. Ltd.; insbesondere die Typen S2410, S2420, S3430 oder S3630); SPUR+* (von Momentive Performance Materials; insbesondere die Typen 101 OLM, 1015LM oder 1050MM); Vorasil^{™} (von Dow Chemical Co.; insbesondere die Typen 602 oder 604); Desmoseal^{®} (von Bayer MaterialScience AG; insbesondere die Typen S XP 2458, S XP 2636, S XP 2749, S XP 2774 oder S XP 2821 ); TEGOPAC^{®} (von Evonik Industries AG; insbesondere die Typen Seal 100, Bond 150 oder Bond 250); oder Geniosil^{®} STP (von Wacker Chemie AG; insbesondere die Typen E15, E35, E10, E30).

Verfahren zur Herstellung der genannten silanmodifizierten Polymere sind dem Fachmann bekannt.

In einer Ausführungsform umfasst die Klebstoff-, Dichtstoff- oder Beschichtungsmittelzusammensetzung zusätzlich mindestens einen Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung.

Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Ruß (Carbon Black), PVC-Pulver oder Hohlkugeln. Bevorzugte Füllstoffe sind Calciumcarbonate, calicinierte Kaoline, Ruß, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Die Klebstoff-, Dichtstoff- oder Beschichtungsmittelzusammensetzung umfasst vorzugsweise bis zu 80 Gew.-%, bevorzugt 5 bis 80 Gew.-%, weiter bevorzugt 40 bis 70 Gew.-%, besonders bevorzugt 50 bis 60 Gew.-%, Füllstoff bezogen auf das Gesamtgewicht der Zusammensetzung. Im Falle einer Beschichtungszusammensetzung kann es aber auch besonders vorteilhaft sein, vergleichsweise niedrigere Füllstoffgehalte zu haben, um eine für die Applikation erforderliche niedrige Viskosität zu erzielen. Vorzugsweise umfasst eine Beschichtungszusammensetzung deshalb bis zu 40 Gew.-% Füllstoff, bevorzugt 5 bis 40 Gew.-%.

In einer Ausführungsform umfasst die Klebstoff-, Dichtstoff- oder Beschichtungsmittelzusammensetzung zusätzlich mindestens einen Weichmacher.

Geeignete Weichmacher sind beispielsweise Ester organischer Carbonsäuren oder deren Anhydride, wie Phthalat, beispielsweise Dioctylphthalat, Diisononylphthalat oder Diisodecylphthalat, Adipate, beispielsweise Dioctyladipat, Azelate und Sebacate, Cyclohexandicarbonsäuredialkylester, bei dem die Alkylreste der Estergruppen unabhängig voneinander jeweils 1 bis 20 C-Atome enthalten, Polyole, beispielsweise Polyoxyalkylenpolyole oder Polyesterpolyole, organische Phosphor- und Sulfonsäureester oder Polybutene. Wenn kein anderer Bestandteil Polymere mit Polyethergruppen enthält, so wird vorzugsweise mindestens ein Polymer mit Polyethergruppen als Weichmacher eingesetzt.

Die Klebstoff-, Dichtstoff- oder Beschichtungsmittelzusammensetzung umfasst vorzugsweise 0 bis 30 Gew.-%, bevorzugt 5 bis 20 Gew.-%, besonders bevorzugt 7,5 bis 15 Gew.-%, Weichmacher bezogen auf das Gesamtgewicht der Zusammensetzung.

In einer Ausführungsform umfasst die Klebstoff-, Dichtstoff- oder Beschichtungsmittelzusammensetzung zusätzlich mindestens ein Trocknungsmittel.

Geeignete Trocknungsmittel sind beispielsweise Vinyltrimethoxysilan, cc-funktionelle Silane wie N-(Silylmethyl)-O-methyl-carbamate, insbesondere N-(Methyldi-methoxysilylmethyl)-O-methylcarbamat, (Methacryloxymethyl)silane, Methoxymethylsilane, N-Phenyl-, N-Cyclohexyl- und N-Alkylsilane, Orthoameisensäureester, Calciumoxid oder Molekularsiebe. Die erfindungsgemäß zu verwendenden Aminosilane können ebenfalls als Trocknungsmittel dienen, dass auf den Einsatz zusätzlicher Trocknungsmittel verzichtet werden kann.

Vorzugsweise wird als Trocknungsmittel ein vinylmodfiziertes Organosilan, wie beispielsweise Vinyltrimethoxysilan oder Vinyltriethoxysilan eingesetzt. Vorzugsweise enthält das Trocknungsmittel keine Gruppen, die in Gegenwart von Wasser Methanol freisetzen. In einer besonderen Ausführungsform, in der die Zusammensetzung im Wesentlichen als Silangruppen Ethoxysilangruppen enthält, ist Vinyltriethoxysilan bevorzugt.

Die Klebstoff-, Dichtstoff- oder Beschichtungsmittelzusammensetzung umfasst vorzugsweise 0,5 bis 10 Gew.-%, bevorzugt 1 bis 7,5 Gew.-%, besonders bevorzugt 1,5 bis 5 Gew.-%, Trocknungsmittel bezogen auf das Gesamtgewicht der Zusammensetzung.

In einer Ausführungsform umfasst die Klebstoff-, Dichtstoff- oder Beschichtungsmittelzusammensetzung zusätzlich mindestens einen Härtungskatalysator. Dieser dient als Katalysator für die Vernetzung von silanmodifizierten Polymeren und weiterer silangruppenhaltiger Verbindungen.

Als solche Katalysatoren können alle bekannten Verbindungen eingesetzt werden, die die hydrolytische Spaltung der hydrolysierbaren Gruppen der Organosilangruppen und/oder die anschließende Kondensation der Si-OH-Gruppe zu Siloxangruppen katalysieren können.

Geeignete Härtungskatalysatoren sind beispielsweise Titanate, wie Tetrabutyltitanat oder Titantetraacetylacetonat; Bismutverbindungen, wie Bismut-tris-2-ethylhexanoat; Zinnverbindungen wie Zinncarboxylate, wie Dibutyl- zinndilaurat (DBTL), Dibutylzinndiacetat oder Dibutylzinndiethylhexanoat; Zinnoxide wie Dibutylzinnoxid und Dioctylzinnoxid; Organoaluminumverbindungen wie Aluminum-tris-acetylacetonat; Chelatverbindungen wie Zirconum-tetra-acetylacetonat; Aminverbindungen oder ihre Salze mit Carbonsäuren, wie Octylamin, Cyclohexylamin, Benzylamin, Dibutylamin, Monoethanolamin, Triethanolamin, Diethylenetriamin, Triethylenetetramin, Triethylenediamin, 1,8-Diazabicyclo[5.4.0]undec-7-en (DBU), 1,5-Diazabicyclo[4.3.0]non-5-en (DBN), 6-(Dibutylamino)-1,8-diazabicyclo[5.4.0]undec-7-en, N- Methyltriazabicyclodecen, Tetramethylguanidin, 2-Guanidinobenzimidazol, Acetylacetoneguanidin, 1 ,3-Di-o-tolylguanidin (DTG), 1 ,3-Diphenylguanidin, o- Tolylbiguanidin, 2-tert-Butyl-1 ,1 ,3,3-tetramethylguanidine oder N-(3-Triethoxysilylpropyl)-4,5-dihydroimidazol, N-(3-Trimethoxysilylpropyl)-4,5-dihydroimidazol, Guanidin, Morpholin, N-methylmorpholin.

Besonders bevorzugt werden 1,8-Diazabicyclo[5.4.0]undec-7-en (DBU) und/oder 1,5-Diazabicyclo[4.3.0]non-5-en (DBN) eingesetzt.

Eine Ausführungsform arbeitet Metallkatalysator-frei, eine andere setzt Katalysatoren ein, die keine Schwermetalle wie Sn enthalten.

Die Klebstoff-, Dichtstoff- oder Beschichtungsmittelzusammensetzungumfasst vorzugsweise 0,01 bis 5 Gew.-%, bevorzugt 0,05 bis 2,5 Gew.-%, besonders bevorzugt 0,1 bis 1 Gew.-%, Härtungskatalysator bezogen auf das Gesamtgewicht der Zusammensetzung.

In einer Ausführungsform umfasst die Klebstoff-, Dichtstoff- oder Beschichtungsmittelzusammensetzung zusätzlich weitere Stabilisatoren, wie beispielsweise UV-Stabilisatoren, UV-Absorber, HALS-Amine oder phenolische Antioxidantien. Aufgrund der stabilisierenden Wirkung der erfindungsgemäß zu verwendenden Aminosilane, kann auf den Einsatz weiterer Stabilisatoren jedoch auch verzichtet werden.

Die erfindungsgemäße Verwendung von Aminosilanen als Stabilisator weist insbesondere Vorteile bei der Verklebung von Bodenbelägen auf. Insbesondere betrifft dies Bodenbeläge, die einer erhöhten Belastung ausgesetzt sind.

Von einer erhöhten Belastung kann ausgegangen werden, wenn eine Klebstoffzusammensetzung in Bereichen eingesetzt wird, die entweder erhöhtem Publikumsverkehr, hohen Lasten oder höheren Temperaturen als der Raumtemperatur ausgesetzt ist. Insbesondere gilt dies für die Verwendung auf Untergründen enthaltend eine Fußboden- oder Wandheizung. In solchen Fällen wird die Klebefuge über Wochen bis Monate im Jahr naturgemäß einer höheren Temperatur als Raumtemperatur ausgesetzt, da für ein Funktionieren der Heizung ein entsprechendes Temperaturgefälle zwischen Raum und Heizmedium gegeben sein muss. Von besonders hoher Belastung kann auch dann ausgegangen werden, wenn die Klebstoffzusammensetzung in der Nähe von anderen natürlichen (Fensternähe) oder künstlichen Wärmequellen eingesetzt wird (Durchleitung von Heizungsrohren, Konvektoren, Kamin oder Kachelöfen).

In einer Ausführungsform betrifft die Erfindung somit die Verwendung eines Aminosilans als Stabilisator für eine Klebstoffzusammensetzung bei der Verklebung eines Bodenbelags auf einem Untergrund. Vorzugsweise handelt es sich hierbei um einen Bodenbelag, der im verklebten Zustand einer Wärmequelle ausgesetzt ist. Besonders bevorzugt handelt es sich hierbei um einen Bodenbelag, der auf einem Untergrund verklebt wird, welcher ein Heizelement umfasst. Bei dem Heizelement handelt es sich beispielsweise um eine Fußboden- oder Wandheizung.

Als Untergrund kommen insbesondere die im Innenausbau üblichen Untergründe in Frage. Dabei handelt es sich beispielsweise um Beton, Zement, Zementestrich, Zementfließestrich, Zementmörtel, zementgebundene Holzfaser, Keramik, Naturstein, Calciumsulfatestrich, Calciumsulfatfließestrich, Magnesitestrich, Holz, Holzwerkstoff, Sperrholz, Kork, Gips, Gipsfaser, Gipskarton, Hartfaser, mineralische Spachtelmasse, textiles faserartiges Material oder eine Kombination dieser Materialien.

Gegebenenfalls können die bautypischen Untergründe durch sogenannte Primer vorbehandelt werden, etwa um haftungsmindernde Stäube zu binden, oder erhöhte Restfeuchtigkeit abzusperren. Solche Produkte sind auf Basis von Epoxidharzen, Polyurethanprepolymeren oder auf Dispersionsbasis erhältlich.

Als Bodenbelag kommen beispielsweise Linoleum-Beläge, PVC-Beläge, Kautschukbeläge, Gummibeläge, textile Bodenbeläge, Laminat oder Holzbelagelemente in Frage. In einer bevorzugten Ausführungsform handelt es sich bei dem Bodenbelag um einen Holzbelag, insbesondere Parkett, ganz besonders Massivparkett.

In einer weiteren Ausführungsform betrifft die erfindungsgemäße Verwendung eine Beschichtungsmittelzusammensetzung, die erhöhten Temperaturen ausgesetzt ist, beispielsweise eine im Baubereich verwendete Beschichtung, beispielsweise Dachbeschichtung, Korrosionsschutzbeschichtung, Rohrleitungsbeschichtung, industrielle Beschichtung.

In einer weiteren Ausführungsform betrifft die erfindungsgemäße Verwendung eine Dichtstoffzusammensetzung, die erhöhten Temperaturen ausgesetzt ist, beispielsweise ein Fassadendichtstoff, ein Dichtstoff in der Elektronik oder Fahrzeugbauindustrie.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung von Klebstoffzusammensetzungen

Eine feuchtigkeitshärtende Klebstoffzusammensetzung I auf Basis eines silanmodifzierten Polymers wurde gemäß der folgenden Vorschrift hergestellt: 2817 g von zuvor 16 Stunden bei 100°C im Umlufttrockenschrank getrocknetem Füllstoff Omyalite 95 T (Calciumcarbonat, Firma Omya) werden mit 519,5 g Weichmacher (Mesamoll, Firma Lanxess), 1501 g Desmoseal XP 2458 (Aliphatisches silanterminiertes Polyurethan-Polymer, Firma Covestro), 41,5 g Cab-O-Sil TS 720 (hydrophobe pyrogene Kieselsäure, Firma Cabot) und 6 g 1,8-Diazabicyclo[5.4.0]undec-7-en (Sigma-Aldrich Co. LLC), sowie 115g Trocknungsmittel (Dynasylan^{®} VTMO, Vinyltrimethoxysilan, Firma Evonik) im Labordissolver mit Butterflyrührer (200 Umdrehungen/min) und Dissolverscheibe (2500 Umdrehungen/min) für 15 min unter statischem Vakuum und Kühlung dispergiert. Unter statischem Vakuum wird hierbei verstanden, dass die Apparatur bis auf einen Druck von 20 mbar evakuiert wird (dynamisches Vakuum) und danach die Verbindung zur Vakuumpupe getrennt wird.

Die Klebstoffzusammensetzung I wurde anschließend im Labordissolver mit Dissolverscheibe (1000 Umdrehungen/min) jeweils mit den in der folgenden Tabelle angegebenen verschiedenen Aminosilanen 5 min unter statischem und anschließend 5 min unter dynamischem Vakuum (20 mbar) vermischt. Es wurden so jeweils 400g einer Klebstoffzusammensetzung II hergestellt und dabei die Mengen an Klebstoffzusammensetzung I und Aminosilan so gewählt, dass sich die in der folgenden Tabelle angegebenen Gewichtsanteile der verschiedenen Aminosilane ergeben. Die Angabe Menge in Gew.-% in der folgenden Tabelle bedeutet, dass beispielsweise für die Herstellung der unter Nr. 2 genannten Zusammensetzung mit 2,04% Gew-% Dynasylan^{®} 1189 391,84 g der Klebstoffzusammensetzung I mit 8,16 g des Aminosilans Dynasylan^{®} 1189 vermischt wurden.

Die Kühlung wurde so gewählt, dass während der ganzen Herstellung eine Temperatur von 65 Grad C nicht überschritten wird.

| Nr. | Aminosilan | Handelsname (alle von Firma Evonik) | Menge in Gew.-% | Anmerkung |
|---|---|---|---|---|
| 1 | ohne Zugabe von Stabilisator | | - | Vergleichsbeispiel |
| 2 | N-(n-Butyl)-3-aminopropyltrimethoxysilan | Dynasylan^{®} 1189 | 2,04 | Erfindungsgemäß es Beispiel |
| 3 | 3 -Aminopropyltrimethoxysilan | Dynasylan^{®} AMMO | 1,45 | Vergleichsbeispiel |
| 4 | 3 -Aminopropyltriethoxysilan | Dynasylan^{®} AMEO | 1,92 | Vergleichsbeispiel |
| 5 | N-(2-Aminoethyl)-3-aminopropyltrimethoxysilan | Dynasylan^{®} DAMO | 1,92 | Erfindungsgemäß es Beispiel |
| 6 | N-(2-Aminoethyl)-3-ammopropylmethyldimethoxysilan | Dynasylan^{®} 1411 | 2,68 | Erfindungsgemäßes Beispiel |
| 7 | 3-Aminopropylmethyldiethoxysilane | Dynasylan^{®} 1505 | 2,48 | Vergleichsbeispiel |
| 8 | Bis(trimethoxysilylpropyl)amine | Dynasylan^{®} 1124 | 2,96 | Erfindungsgemäßes Beispiel |

Die somit erhaltenen Klebstoffzusammensetzungen wurden nach sieben Tagen Lagerung in einer Kartusche mit Hilfe eines Rakels zu Membranen mit einer gleichmäßigen Schichtdicke von 2 mm auf eine Polyethylen-Folie aufgebracht und für 14 Tage bei 23°C und 50% Luftfeuchtigkeit ausgehärtet, wobei die Membranen nach 7 Tagen von der Folie gelöst und gewendet wurden. Anschließend wurden die Eigenschaften der erhaltenen Membranen anhand der folgenden Verfahren bestimmt.

### Bestimmung der Oxidationsinduktionszeit

Die Oxidationsinduktionszeit (OIT) wird mit einem DSC Experiment im in einem Kalorimeter Pyris-1 (Fa. Perkin-Elmer) gemäß DIN EN ISO 11357-6: 2013 bestimmt. Es werden aus den Membranen Stücke von ca. 7 mg Gewicht mit einer Lochstanze ausgeschnitten. Es findet keine Vorkonditionierung der Probe statt. Die Proben werden mit hoher Heizrate (200 K/min) von RT auf 140°C Lagerungstemperatur aufgeheizt und bei 140°C und in Sauerstoff in einem Kalorimeter für 120 min gelagert. Die OIT ist der Zeitpunkt, bei dem eine exotherme Oxidationsreaktion einsetzt.

### Bestimmung der Shore-A-Härte nach Lagerung

Die Prüfung der Shore-A-Härte erfolgt an den Membranen gemäß DIN ISO 7619-1. Für die Ermittlung der Shore-A-Härte werden drei Membranen aufeinander gelegt, um eine Schichtdicke von 6 mm zu gewährleisten. Die Shore-A-Härte wurde an den, wie oben beschrieben, ausgehärteten Membranen gemessen (folgende Tabelle "Shore-A-Härte 14 d bei 23°C"). Es werden jeweils die aufeinandergeschichteten Membranen im Umluftofen bei 90°C für 7d gelagert und nach Abkühlung wird die Shore-A Härte gemäß DIN ISO 7619-1 bestimmt.

### Lagerung auf Beton

Die Klebstoffzusammensetzungen werden mit einem Rakel in einer gleichmäßigen Schichtdicke von 1 mm auf Beton (ähnlich ISO 13640 M1, Firma Rocholl) aufgetragen. Die Proben werden zunächst fünf Tage bei bei 23°C und 50% Luftfeuchtigkeit und anschließend bei 80°C im Umlufttrockenschrank gelagert. Nach 48 h und dann jeweils im Intervall von 24 h im Umlufttrockenschrank wird auf optisch wahrnehmbare Veränderungen (z.B. Rissbildung und Verpulverung) geprüft. Es wird angegeben, wie viele Tage die Proben ohne sichtbare Veränderungen gelagert werden können.

Die Ergebnisse dieser Untersuchungen sind in folgender Tabelle zusammengefasst.

| Nr. | OIT (Min.) | Lagerung auf Beton bei 80°C (Tage) | Shore-A-Härte 14 d bei 23°C | Shore-A-Härte 7 d bei 90°C | Anmerkung |
|---|---|---|---|---|---|
| 1 | <3 | <3 | 48 | Zerstört | Vergleichsbeispiel |
| 2 | 77 | 21 | 52 | 55 | erfindungsgemäßes Beispiel |
| 3 | 11 | 3 | 64 | zerstört | Vergleichsbeispiel |
| 4 | 6 | 3 | 64 | zerstört | Vergleichsbeispiel |
| 5 | 102 | 21 | 66 | 69 | erfindungsgemäßes Beispiel |
| 6 | 102 | > 24 | 65 | 69 | erfindungsgemäßes Beispiel |
| 7 | 9 | 5 | 59 | zerstört | Vergleichsbeispiel |
| 8 | 54 | 17 | 67 | 66 | erfindungsgemäßes Beispiel |

Diese Ergebnisse zeigen, dass unter Verwendung von Aminosilanen mit sekundären Aminogruppen die Oxidationsinduktionszeit, die Lagerstabilität auf Beton und insbesondere die Lagerstabilität bei 90°C deutlich verbessert werden können (Zusammensetzungen 2, 5, 6 und 8). Überraschenderweise wird dieser Effekt bei Verwendung von ähnlichen Aminosilanen, die jedoch nicht über eine sekundäre Aminogruppe, nicht erzielt (Zusammensetzungen 3, 4 und 7).

## Patentansprüche

1. Verwendung eines Aminosilans als Stabilisator für eine Klebstoff-, Dichtstoff- oder Beschichtungszusammensetzung, wobei das Aminosilan wenigstens eine sekundäre Aminogruppe aufweist, und wobei der Stabilisator die thermische Beständigkeit der Zusammensetzung im ausgehärteten Zustand erhöht.

2. Die Verwendung nach Anspruch 1,
wobei das Aminosilan eine Struktureinheit der allgemeinen Formel (I) aufweist,
R²₃Si-CₘH₂ₘ-NH-R¹ (I),
wobei R¹ ausgewählt ist aus -CₙH₂ₙ₊₁, -CₙH₂ₙNH₂, -CₙH₂ₙ-SiR³₃, -(C₃₋₁₀)-Cycloalkyl,
jeder der Reste R² und R³ unabhängig voneinander ausgewählt ist aus Alkyl-, Alkoxy-, Acyloxy- und Organosiloxangruppen, und
m und n jeweils ganze Zahlen von 1 bis 4 darstellen.

3. Die Verwendung nach einem der Ansprüche 1 bis 2,
wobei das Aminosilan eine Verbindung der allgemeinen Formel (II) ist,
R²₃Si-CₘH₂ₘ-NH-R¹ (II),
wobei R¹ ausgewählt ist aus -CₙH₂ₙ₊₁, -CₙH₂ₙNH₂, -CₙH₂ₙ-SiR³₃, -(C₃₋₁₀)-Cycloalkyl,
jeder der Reste R² und R³ unabhängig voneinander ausgewählt ist aus -(C₁-C₁₂)-Alkyl, -O-(C₁-C₁₂)-Alkyl, -O-CO-(C₁-C₁₂)-Alkyl,
mindestens einer der Reste R² und/oder mindestens einer der Reste R³ eine -O-(C₁-C₁₂)-Alkylgruppe darstellen, und
m und n jeweils ganze Zahlen von 1 bis 4 darstellen.

4. Die Verwendung nach einem der Ansprüche 2 bis 3,
wobei R¹ ausgewählt ist aus -C₄H₉, -C₂H₄NH₂ und -C₂H₄SiR³₃.

5. Die Verwendung nach einem der Ansprüche 2 bis 4,
wobei m = 1 oder m = 3 ist.

6. Die Verwendung nach einem der Ansprüche 2 bis 5,
wobei jeder der Reste R² und R³ unabhängig voneinander ausgewählt ist aus Methyl, Ethyl, Methoxy, Ethoxy; und
mindestens einer der Reste R² und/oder mindestens einer der Reste R³ ausgewählt sind aus Methoxy und Ethoxy.

7. Die Verwendung nach einem der Ansprüche 1 bis 6,
wobei das Aminosilan der Klebstoff-, Dichtstoff- oder Beschichtungsmittelzusammensetzung in einer Menge von 0,5 bis 10 Gew.-% bezogen auf das Gesamtgewicht der Zusammensetzung zugesetzt wird.

8. Die Verwendung nach einem der Ansprüche 1 bis 7,
wobei die Klebstoff-, Dichtstoff- oder Beschichtungsmittelzusammensetzung ein Polymer, welches mindestens eine Polyetherstruktureinheit enthält, umfasst.

9. Die Verwendung nach einem der Ansprüche 1 bis 8,
wobei die Klebstoff-, Dichtstoff- oder Beschichtungsmittelzusammensetzung eine feuchtigkeitshärtende Zusammensetzung ist.

10. Die Verwendung nach Anspruch 9,
wobei die Klebstoff-, Dichtstoff- oder Beschichtungsmittelzusammensetzung ein silanmodifiziertes Polymer, welches mindestens eine Polyetherstruktureinheit enthält, umfasst.

11. Die Verwendung nach Anspruch 10,
wobei die Klebstoff-, Dichtstoff- oder Beschichtungsmittelzusammensetzung 10 bis 40 Gew.-% des silanmodifizierten Polymers umfasst, bezogen auf das Gesamtgewicht der Zusammensetzung.

12. Die Verwendung nach einem der Ansprüche 10 und 11,
wobei das silanmodifizierte Polymer erhältlich ist durch
- Umsetzung von Allylgruppen-haltigen Polyethern mit Hydrosilanen;
- Copolymerisation von Alkylenoxiden mit Epoxysilanen;
- Umsetzung von Polyetherpolyolen mit Epoxysilanen:
- Umsetzung von Polyetherpolyolen mit Isocyanatosilanen; oder
- Umsetzung von Isocyanatgruppen-haltigen Urethan-Polyethern mit Amino-, Hydroxyund/oder Mercaptosilanen.

13. Die Verwendung nach einem der Ansprüche 10 bis 12,
wobei das silanmodifizierte Polymer wenigstens eine feuchtigkeitsreaktive Organosilangruppe der allgemeinen Formel (VI) aufweist:
-SiR⁴₃ (VI),
wobei die Reste R⁴ unabhängig voneinander ausgewählt sind aus -(C₁-C₁₂)-Alkyl und -O-(C₁-C₁₂)-Alkyl; und
mindestens einer der Reste R⁴ ausgewählt ist aus -O-(C₁-C₁₂)-Alkyl.

14. Die Verwendung nach einem der Ansprüche 1 bis 13,
wobei das Aminosilan als Stabilisator für eine Klebstoffzusammensetzung bei der Verklebung eines Bodenbelags auf einem Untergrund eingesetzt wird.

15. Die Verwendung nach Anspruch 14,
wobei der Bodenbelag ein Holzbelag ist und/oder der Untergrund ein Heizelement umfasst.

## Claims

1. Use of an aminosilane as stabilizer for an adhesive, sealant or coating composition, where the aminosilane has at least one secondary amino group, and where the stabilizer increases the thermal stability of the composition in the fully cured state.

2. Use according to Claim 1,
where the aminosilane has a structural unit of the general formula (I),
R²₃Si-CₘH₂ₘ-NH-R¹ (I),
where R¹ is selected from -CₙH₂ₙ₊₁, -CₙH₂ₙNH₂, -CₙH₂ₙ-SiR³₃, - (C₃₋₁₀) -cycloalkyl,
each of the radicals R² and R³ independently of one another is selected from alkyl, alkoxy, acyloxy, and organosiloxane groups, and
m and n are each integers from 1 to 4.

3. Use according to either of Claims 1 and 2,
where the aminosilane is a compound of the general formula (II),
R²₃Si-CₘH₂ₘ-NH-R¹ (II),
where R¹ is selected from -CₙH₂ₙ₊₁, -CₙH₂ₙNH₂, -CₙH₂ₙ-SiR³₃, -(C₃₋₁₀)-cycloalkyl,
each of the radicals R² and R³ independently of one another is selected from -(C₁-C₁₂)-alkyl, -O-(C₁-C₁₂)-alkyl, -O-CO-(C₁-C₁₂)-alkyl,
at least one of the radicals R² and/or at least one of the radicals R³ are an -O-(C₁-C₁₂)-alkyl group, and
m and n are each integers from 1 to 4.

4. Use according to either of Claims 2 and 3,
where R¹ is selected from -C₄H₉, -C₂H₄NH₂, and - C₂H₄SiR³₃.

5. Use according to any of Claims 2 to 4,
where m = 1 or m = 3.

6. Use according to any of Claims 2 to 5,
where each of the radicals R² and R³ independently of one another is selected from methyl, ethyl, methoxy, ethoxy; and
at least one of the radicals R² and/or at least one of the radicals R³ are selected from methoxy and ethoxy.

7. Use according to any of Claims 1 to 6,
where the aminosilane is added to the adhesive, sealant or coating material composition in an amount of 0.5 to 10 wt%, based on the total weight of the composition.

8. Use according to any of Claims 1 to 7,
where the adhesive, sealant or coating material composition comprises a polymer which includes at least one polyether structural unit.

9. Use according to any of Claims 1 to 8,
where the adhesive, sealant or coating material composition is a moisture-curing composition.

10. Use according to Claim 9,
where the adhesive, sealant or coating material composition comprises a silane-modified polymer which includes at least one polyether structural unit.

11. Use according to Claim 10,
where the adhesive, sealant or coating material composition comprises 10 to 40 wt% of the silane-modified polymer, based on the total weight of the composition.

12. Use according to either of Claims 10 and 11,
where the silane-modified polymer is obtainable by
- reaction of hydrosilanes with polyethers containing allyl groups;
- copolymerization of alkylene oxides with epoxysilanes;
- reaction of polyether polyols with epoxysilanes;
- reaction of polyether polyols with Isocyanatosilanes; or
- reaction of urethane polyethers containing isocyanate groups with amino-, hydroxy- and/or mercaptosilanes.

13. Use according to any of Claims 10 to 12,
where the silane-modified polymer has at least one moisture-reactive organosilane group of the general formula (VI):
-SiR⁴₃ (VI),
where the radicals R⁴ independently of one another are selected from -(C₁-C₁₂)-alkyl and -O-(C₁-C₁₂)-alkyl; and
at least one of the radicals R⁴ is selected from - O-(C₁-C₁₂)-alkyl.

14. Use according to any of Claims 1 to 13,
where the aminosilane is used as stabilizer for an adhesive composition in the bonding of a floor covering to a substrate.

15. Use according to Claim 14,
where the floor covering is a wood covering and/or the substrate comprises a heating element.

## Revendications

1. Utilisation d'un aminosilane comme stabilisant pour une composition adhésive, d'étanchéité ou d'un revêtement, l'aminosilane comportant au moins un groupe amino secondaire, et le stabilisant augmentant la résistance thermique de la composition à l'état durci.

2. Utilisation selon la revendication 1,
l'aminosilane comportant un motif structural de formule générale (I)
R²₃Si-CₘH₂ₘ-NH-R¹ (I),
dans laquelle R¹ est choisi parmi -CₙH₂ₙ₊₁, -CₙH₂ₙNH₂, - CₙH₂ₙ-SiR³₃, -cycloalkyle en C₃₋₁₀,
chacun des radicaux R² et R³ étant indépendamment de l'autre choisi parmi les groupes alkyle, alcoxy, acyloxy et organosiloxane, et
m et n représentant chacun un nombre entier de 1 à 4.

3. Utilisation selon l'une des revendications 1 à 2,
l'aminosilane étant un composé de formule générale (II)
R²₃Si-CₘH₂ₘ-NH-R¹ (II),
R¹ étant choisi parmi -CₙH₂ₙ₊₁, -CₙH₂ₙNH₂, -CₙH₂ₙ-SiR³₃, - cycloalkyle en C₃₋₁₀,
chacun des radicaux R² et R³ étant indépendamment de l'autre choisi parmi les groupes -alkyle en C₁-C₁₂, -O-alkyle en C₁-C₁₂, -O-CO-alkyle en C₂-C₁₂,
au moins l'un des radicaux R² et/ou au moins l'un des radicaux R³ représentant un groupe -O-alkyle en C₂-C₁₂, et
m et n représentant chacun un nombre entier de 1 à 4.

4. Utilisation selon l'une des revendications 2 à 3,
R¹ étant choisi parmi -C₄H₉, -C₂H₄NH₂ et -C₂H₄SiR³₃.

5. Utilisation selon l'une des revendications 2 à 4,
m représentant 1 ou 3.

6. Utilisation selon l'une des revendications 2 à 5,
chacun des radicaux R² et R³ étant indépendamment de l'autre choisi parmi les groupes méthyle, éthyle, méthoxy, éthoxy ; et
au moins l'un des radicaux R² et/ou au moins l'un des radicaux R³ est choisi parmi les groupes méthoxy et éthoxy.

7. Utilisation selon l'une des revendications 1 à 6,
l'aminosilane étant ajouté à la composition adhésive, d'étanchéité ou de revêtement en une quantité de 0,5 à 10 % en poids par rapport au poids total de la composition.

8. Utilisation selon l'une des revendications 1 à 7,
la composition adhésive, d'étanchéité ou de revêtement comprenant un polymère qui contient au moins un motif structural polyéther.

9. Utilisation selon l'une des revendications 1 à 8,
la composition adhésive, d'étanchéité ou de revêtement étant une composition durcissant à l'humidité.

10. Utilisation selon la revendication 9,
la composition adhésive, d'étanchéité ou de revêtement comprenant un polymère modifié par un silane, qui contient au moins un motif structural polyéther.

11. Utilisation selon la revendication 10,
la composition adhésive, d'étanchéité ou de revêtement comprenant 10 à 40 % en poids du polymère modifié par un silane, par rapport au poids total de la composition.

12. Utilisation selon l'une des revendications 10 et 11,
le polymère modifié par un silane pouvant être obtenu par
- réaction de polyéthers contenant des groupes allyle avec des hydrosilanes ;
- copolymérisation d'oxydes d'alkylène avec des époxysilanes ;
- réaction de polyéther polyols avec des époxy silanes ;
- réaction de polyétherpolyols avec des isocyanatosilanes ; ou
- réaction d'uréthane-polyéthers contenant des groupes isocyanate avec des amino-, des hydroxyet/ou des mercaptosilanes.

13. Utilisation selon l'une des revendications 10 à 12,
le polymère modifié par un silane comprenant au moins un groupe organosilane réactif à l'humidité de formule générale (VI) :
-SiR⁴₃ (VI),
les radicaux R⁴ étant indépendamment l'un de l'autre choisis parmi les groupes -alkyle en C₁-C₁₂ et -O-alkyle en C₁-C₁₂ ; et
au moins l'un des radicaux R⁴ est choisi parmi les groupes -O-alkyle en C₁-C₁₂.

14. Utilisation selon l'une des revendications 1 à 13,
l'aminosilane étant utilisé comme stabilisant pour une composition adhésive lors du collage d'un revêtement de sol sur un support.

15. Utilisation selon la revendication 14,
le revêtement de sol étant un revêtement en bois et/ou le support comprenant un élément chauffant.
